(19) **Europäisches Patentamt**

**European Patent Office**

**Office européen des brevets**

(11) Numéro de publication: **0 262 142 B1**

(12) **FASCICULE DE BREVET EUROPEEN**

(45) Date de publication du fascicule du brevet: **19.09.90**

(51) Int. Cl.⁵: **G 01 B 11/16,** G 01 B 11/27, G 01 B 5/00

(21) Numéro de dépôt: **86904214.3**

(22) Date de dépôt: **08.07.86**

(86) Numéro de dépôt international: **PCT/FR86/00246**

(87) Numéro de publication internationale: **WO 87/00268 15.01.87 Gazette 87/01**

(54) DISPOSITIF POUR CONTROLER LA GEOMETRIE D'UNE STRUCTURE MECANIQUE.

(30) Priorité: **08.07.85 FR 8510435**

(43) Date de publication de la demande: **06.04.88 Bulletin 88/14**

(45) Mention de la délivrance du brevet: **19.09.90 Bulletin 90/38**

(84) Etats contractants désignés: **AT BE CH DE FR GB IT LI LU NL SE**

(56) Documents cités:
EP-A-0 067 531
WO-A-84/04960
FR-A-2 082 173
GB-A- 202 261
GB-A-2 117 511
GB-A-2 128 324

(73) Titulaire: **BERTIN & CIE SOCIETE ANONYME Zone Industrielle F-78370 Plaisir (FR)**

(72) Inventeur: **PAVLIN, Cyril, François 1, chemin de la Maladrerie Rosay F-78790 Septeuil (FR)**
Inventeur: **PREVOST, Marc 5, rue du Val d'Osne F-94410 Saint Maurice (FR)**

(74) Mandataire: **Ramey, Daniel Cabinet Ores 6 Avenue de Messine F-75008 Paris (FR)**

Courier Press, Leamington Spa, England.

## Description

Domaine technique

L'invention concerne un dispositif pour contrôler la géométrie d'une structure mécanique comprenant des éléments rigides reliés entre eux, l'invention étant applicable aussi bien à des structures fixes dont il faut surveiller les déformations qu'à des structures comprenant des éléments mobiles capables de déplacements asservis, telles par exemple que des robots ou des bras manipulateurs.

Ces robots sont utilisés actuellement de plus en plus dans les usines de fabrication ou d'assemblage, pour effectuer des tâches répétitives qui peuvent être relativement complexes. Ils sont formés en général de plusieurs éléments montés les uns à la suite des autres et capables d'être déplacés les uns par rapport aux autres, en rotation ou en translation, de façon à ce qu'une charge ou un outil porté par le dernier élément du robot puisse être déplacé d'un point prédéterminé à un autre les divers éléments du robot étant pour cela munis de moteurs et de capteurs de déplacement reliés à un système de traitement de l'information dans lequel ont été programmés les mouvements à effectuer.

La charge que peut porter un robot est en général une faible fraction de son poids, typiquement de l'ordre de 1/20, pour conserver une bonne précision, car sinon les divers éléments du robot sont soumis, au cours de leurs déplacements, à des déformations de flexion et de torsion qui varient en fonction de la nature et de l'importance de la charge portée par le dernier élément et aussi en fonction des positions des divers éléments les uns par rapport aux autres.

Technique antérieure

Il est déjà connu de soumettre ces robots à des essais répétitifs en laboratoire ou lors de leur mise en service, pour déterminer l'écart entre une position théorique de la charge portée par le dernier élément quand le robot est dans une configuration déterminée (position occupée en l'absence de déformation des éléments) et la position réelle de la charge, et pour tenter d'annuler cet écart par modification des positions réellement occupées par divers éléments du robot.

Toutefois, ces essais et ces réglages doivent être recommencés dès que la nature, l'importance de la charge ou son déplacement sont modifiés.

Il n'existe actuellement aucun dispositif capable de détecter et de mesurer en permanence les déformations des éléments d'un robot, quels que soient le mouvement du robot et l'importance et la nature de la charge, et de les prendre en compte pour corriger la position de la charge et annuler son écart par rapport à une position théorique.

On connaît, par EP-A-0 067 531 et GB-A-2 128 324, des dispositifs permettant de mesurer des déformations ou des déplacements d'un élément mobile, grâce à un faisceau lumineux qui parcourt cet élément dans deux directions opposées et qui est reçu par des photo détecteurs. En particulier, EP-A-0 067 531 décrit l'implantation de détecteurs de déplacement ou de déformation en divers points d'une structure, et leurs liaisons à un système de traitement de l'information. Toutefois, chaque déplacement ou déformation est mesuré de façon isolée, indépendamment des déplacements ou déformations aux autres points de la structure, et ne peut donc être connu ou déterminé à partir des déformations en ces autres points.

Exposé de l'invention

L'invention vise à combler cette lacune et a pour objet un dispositif permettant en particulier de détecter et de mesurer en permanence les déformations des éléments d'un robot, quels que soient le mouvement du robot et l'importance et la nature de la charge et de les prendre en compte pour corriger la position de la charge et annuler son écart par rapport à une position théorique.

Elle a également pour objet un dispositif de ce type, permettant de détecter et de mesurer en permanence les déformations des éléments d'une structure fixe, notamment lorsque l'implantation de cette structure rend son accès difficile ou dangereux ou bien lorsque les moyens connus de contrôle et de surveillance habituellement utilisés ne peuvent être mis en oeuvre.

Elle propose à cet effet un dispositif pour contrôler la géométrie d'une structure mécanique à plusieurs éléments rigides reliés entre eux, comprenant des moyens pour détecter et mesurer en permanence les positions relatives de ces éléments, ces moyens comprenant pour chaque élément des premier et second faisceaux lumineux parcourant l'élément correspondant dans des directions opposées et des moyens photodétecteurs associés à chaque élément et positionnés de façon à recevoir au moins des fractions des faisceaux lumineux, caractérisé en ce qu'il comprend également des moyens associés à chaque élément pour diriger une fraction de l'un des faisceaux lumineux de cet élément vers un élément adjacent de la structure pour constituer un premier faisceau lumineux de cet élément adjacent.

Chaque faisceau lumineux est de préférence réglé pour s'étendre le long de l'axe de l'élément correspondant de la structure, lorsque cet élément n'est soumis à aucune charge ou sollicitation extérieure, et rencontrer des moyens photodétecteurs qui sont associés fixement à cet élément. Toute déformation ultérieure de l'élément se traduira par un déplacement du point d'impact du faisceau lumineux sur les moyens photodétecteurs, ce qui permet de mesurer ce déplacement et de déterminer la ou les déformations de l'élément.

De préférence, les moyens photodétecteurs sont des cibles ou des éléments photoélectriques bidimensionnels mesurant l'écart du point d'impact du faisceau par rapport à un point de référence, qui peut être leur centre.

Le dispositif peut comprendre une source lumineuse unique qui engendre le faisceau lumineux précité et qui est disposée par exemple en un point fixe d'une extrémité de la structure, et des moyens de jonction optique entre les éléments, qui assurent la continuité du faisceau lumineux d'un élément à l'autre de la structure.

Ces moyens de jonction optique peuvent être constitués par des miroirs et/ou des fibres optiques.

Par ailleurs, au moins un élément de la structure comprend deux segments de squelette optique, qui sont orientés en sens inverse l'un de l'autre et qui sont dirigés chacun vers des moyens photodétecteurs associés à cet élément.

On peut ainsi déterminer et différencier les diverses déformations subies par cet élément.

Selon encore une autre caractéristique de l'invention, les moyens photodétecteurs précités sont reliés à des moyens de traitement de l'information permettant de déterminer la déformation de l'ensemble de la structure ou le déplacement d'au moins un point particulier de celle-ci.

On peut ainsi surveiller l'évolution des déformations d'une structure fixe.

Lorsque la structure comprend des éléments mobiles capables de déplacements commandés les uns par rapport aux autres et dont le dernier doit être positionné avec précision par rapport au premier ou par rapport à un support fixe (cas d'un robot ou d'un bras manipulateur par exemple), les moyens précités de traitement de l'information prennent en compte les déformations mesurées des éléments de la structure pour commander le déplacement d'au moins un des éléments mobiles précités afin de compenser tout écart de position et d'orientation du dernier élément.

L'invention permet alors d'améliorer, d'un facteur compris entre 10 et 100, la précision d'un robot ou d'un bras manipulateur, tout en permettant de réduire son poids.

On sait en effet que le poids d'un robot ou d'un bras manipulateur est inversement proportionnel à la précision désirée et proportionnel à $L^n$, L étant la somme des longueurs des éléments constituant ce robot ou ce bras et n étant de l'ordre de 3,5. Il en résulte que, si l'on veut améliorer la précision d'un facteur 10, le poids du robot ou du bras manipulateur est multiplié par 10 et que, si la longueur totale des éléments est augmentée de 50%, le poids est multiplié par un facteur 4 environ. L'invention, qui permet de mesurer en permanence et de prendre en compte les diverses déformations des éléments du robot ou du bras, permet de s'affranchir de ces contraintes et d'améliorer la précision tout en diminuant le poids.

Description sommaire des dessins

Dans la description qui suit, faite à titre d'exemple, on se réfère aux dessins annexés, dans lesquels:

la figure 1 est une vue schématique d'un bras manipulateur formé de trois éléments et représente les déformations de ces éléments;

la figure 2 représente schématiquement un bras manipulateur à trois éléments équipés d'un dispositif selon l'invention;

la figure 3 représente schématiquement les moyens de commande de ce bras;

les figures 4 et 5 représentent schématiquement une autre forme de réalisation de l'invention.

Manières de réaliser l'invention

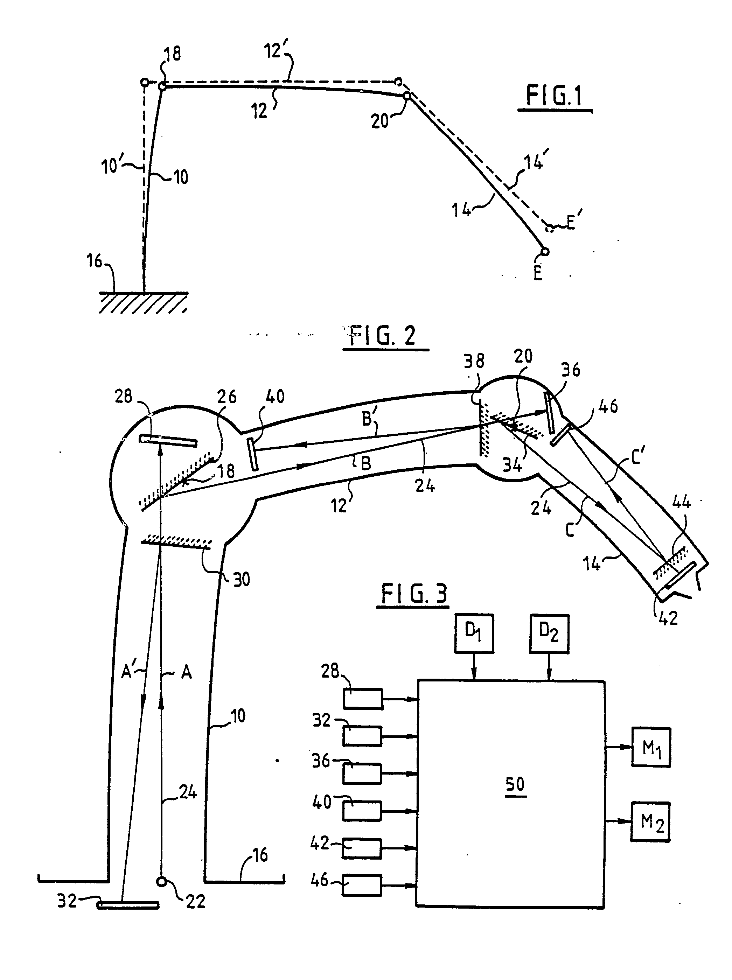

En figure 1, on a représenté très schématiquement un bras manipulateur à trois éléments 10, 12 et 14, le premier élément 10 étant solidaire par une extrémité d'un support fixe 16 sensiblement non déformable, le deuxième élément 12 étant monté par une extrémité à pivotement autour d'un axe 18 sur l'autre extrémité du premier élément 10, et le troisième élément 14 étant monté par une extrémité à pivotement autour d'un axe 20 sur l'autre extrémité de l'élément 12, l'extrémité libre du premier élément 14 étant destinée à porter une charge ou un outil qui doit être déplacé d'un point prédéterminé à un autre par rotation des éléments 12 et 14 autour des axes 18 et 20 respectivement.

Les lignes en trait pointillé 10', 12' et 14' représentent les positions qui seraient occupées par les éléments 10, 12 et 14 en l'absence de charge, tandis que les lignes en trait plein 10, 12 et 14 représentent les positions réellement occupées par ces éléments, en raison des déformations de flexion et de torsion qu'ils subissent en charge. Il existe donc un écart entre la position occupée réellement par l'extrémité libre E du troisième élément 14 et la position théorique E' qu'occuperait cette extrémité libre en l'absence de charge portée par le bras. Cet écart est constitué, non seulement par la distance entre les points E et E', mais également par l'angle formé entre le segment de droite 14' et la tangente au segment de courbe 14 à son extrémité E. Pour annuler ou au moins réduire cet écart et améliorer ainsi la précision du bras, il est nécessaire de commander le pivotement de l'élément 12 autour de l'axe 18 et celui de l'élément 14 autour de l'axe 20 de façon à ramener le point E au voisinage immédiat du point E', et aussi pour réduire ou annuler l'angle entre le segment 14' et la tangente au segment 14 à son extrémité E.

Ces réglages doivent être recommencés à chaque fois que la nature ou l'importance de la charge portée par le troisième élément 14 varie et à chaque fois que le trajet de la charge est modifié. Comme les éléments mobiles 12 et 14 du bras sont équipés de moteurs de déplacement et de capteurs de déplacement qui sont reliés à un système de traitement de l'information, par exemple un ordinateur, dans lequel sont programmés les mouvements à effectuer, on comprend que ces réglage sont assez délicats, longs et particulièrement peu commodes à réaliser dans un environnement industriel.

On se réfère maintenant à la figure 2, représentant un bras manipulateur à trois éléments qui comprend un dispositif de contrôle selon l'invention.

Les trois éléments du bras et les axes de pivotement seront désignés par les mêmes références 10, 12, 14, 18 et 20 respectivement qu'en figure 1. Les éléments 10, 12 et 14 sont tubulaires, ce qui permet de loger à l'intérieur de ces éléments le dispositif de contrôle selon l'invention, qui est ainsi protégé.

L'extrémité du premier élément 10 qui est solidaire du socle ou du bâti fixe 16 est équipée d'une source de lumière 22 émettant un faisceau lumineux 24 (avantageusement un faisceau de lumière cohérente) en direction de l'extrémité opposée du premier élément 10, ce faisceau lumineux 24 coïncidant avec l'axe de l'élément 10 et rencontrant l'axe 18 de pivotement du second élément 12, lorsque le premier élément 10 ne subit aucune déformation. Un miroir de renvoi 26 passant par l'axe 18 réfléchit au moins une fraction du faisceau lumineux 24 le long de l'axe de l'élément 12 en direction de l'axe 20 de pivotement du troisième élément 14, et laisse passer une fraction du faisceau lumineux 24 vers des moyens photodétecteurs 28, qui peuvent être constitués par un ensemble bidimensionnel d'éléments photoélectriques permettant de mesurer l'écart entre le centre de cet ensemble et le point d'impact du faisceau lumineux. Ces moyens photodétecteurs 28 sont associés fixement à l'extrémité de l'élément 10. Un autre miroir 30, solidaire de l'extrémité supérieure du premier élément 10, est interposé entre la source de lumière 22 et le miroir 26 et est conçu de façon à laisser passer une fraction du faisceau lumineux 24 émis par cette source en direction du miroir 26 et à renvoyer l'autre fraction de ce faisceau lumineux vers des moyens photodétecteurs 32, du même type que les moyens 28, qui sont solidaires de l'extrémité inférieure du premier élément 10.

De même, un miroir de renvoi 34 est disposé à la jonction entre les éléments 12 et 14 et passe par l'axe de pivotement 20, des moyens photodétecteurs 36 du même type que les précédents sont associés fixement à la seconde extrémité du deuxième élément 12, un miroir de renvoi 38 du même type que le miroir 30 est associé fixement à cette seconde extrémité de l'élément 12, et des moyens photodétecteurs 40, du même type que les précédents, sont associés fixement à la première extrémité de l'élément 12. Ainsi, une fraction du faisceau lumineux 24 réfléchi par le miroir 26 est renvoyée par le miroir 38 en direction des moyens photodétecteurs 40, l'autre fraction du faisceau lumineux atteint le miroir 34 qui en laisse passer une partie vers les moyens photodétecteurs 36 et qui en réfléchit l'autre partie vers des moyens photodétecteurs 42 solidaires de l'extrémité libre du troisième élément 14, un miroir 44 du même type que les miroirs 30 et 38 étant également solidaire de cette extrémité libre et interposé entre le trajet du faisceau lumineux dirigé vers les moyens photodétecteurs 42 pour renvoyer une fraction de ce faisceau sur des moyens photodétecteurs 46 solidaires de la première extrémité de l'élément 14.

On constitue ainsi un "squelette optique" du bras manipulateur, ce squelette optique étant formé par des segments A, B et C qui sont associés aux éléments 10, 12 et 14 respectivement, chaque segment parcourant l'élément associé entre ses extrémités et coïncidant avec l'axe de cet élément en l'absence totale de déformation. De plus, chaque segment A, B, C est associé à un segment A', B', C' respectivement, de sens inverse, qui arrive au centre des moyens photodétecteurs associés 32, 40, 46 respectivement, en l'absence de déformation des éléments 10, 12 et 14 provoquée par une charge.

Les miroirs 26, 30, 34, 38 et 44 ont été représentés sous forme de miroirs semi-transparents pour mieux faire comprendre leurs fonctions. Les miroirs 26 et 34 qui forment les moyens de jonction optiques entre les éléments A, B et C du squelette optique sont asservis au pivotement des éléments 12 et 14 respectivement, c'est-à-dire que le miroir 26 pivote autour de l'axe 18 d'un angle a lorsque l'élément 12 pivote autour de cet axe d'un angle égal à 2a, et qu'il en est de même pour le miroir 34 et l'élément 14. Ces miroirs, ainsi que les miroirs 30, 38 et 44, peuvent être remplacés par des fibres optiques, qui rempliront les mêmes fonctions.

Le dispositif est réglé initialement de façon à ce que, en l'absence de charge déformant les éléments 10, 12 et 14, les segments A, B et C du squelette optique coïncident avec les axes des éléments 10, 12 et 14, et que les fractions de faisceau lumineux atteignent les moyens photodétecteurs 28, 32, 36, 40, 42 et 46 en leurs centres. Ce réglage initial étant réalisé, toute déformation d'un élément du bras se traduira par un écart entre le point d'impact d'une fraction du faisceau et le centre des moyens photodétecteurs associés aux extrémités de cet élément.

Dans l'exemple représenté en figure 2, on obtient ainsi quatre informations (deux informations par moyen photodétecteur) pour chaque élément 10, 12 ou 14. S'il est nécessaire d'obtenir un plus grand nombre d'informations, on associe des moyens photodétecteurs supplémentaires à l'élément correspondant du bras manipulateur et on dirige sur ces moyens supplémentaires un segment supplémentaire de squelette optique, formé à partir du faisceau lumineux 24 émis par la source 22 ou formé par un autre faisceau lumineux émis par cette même source.

Les informations ainsi recueillies sur les déformations des éléments 10, 12 et 14 sont traitées à l'aide du système représenté en figure 3, qui comprend des moyens 50 de traitement de l'information, dont certaines entrées sont reliées aux sorties des moyens photodétecteurs 28, 32, 36, 40, 42 et 46 respectivement, dont d'autres entrées sont reliées à des capteurs de déplacement D1 et D2 mesurant respectivement la rotation de l'élément 12 autour de l'axe 18 et la rotation de l'élément 14 autour de l'axe 20, et dont deux sorties sont reliées aux moteurs M1 et M2 de pivotement des éléments 12 et 14 autour des axes 18 et 20 respectivement.

Les mesures fournies par les moyens photodétecteurs sont prises en compte, avec les mesures fournies par les capteurs de déplacement D1 et D2, par les moyens 50 de traitement de l'information qui élaborent à partir de ces mesures les signaux de commande des moteurs M1 et M2 de façon telle que l'extrémité libre du dernier élément 14 du bras manipulateur soit ramenée à la position théorique qu'elle doit occuper, avec l'orientation angulaire voulue, et cela quelle que soit l'importance ou la nature de la charge transportée.

Grâce à la mesure et à la prise en compte permanente des diverses déformations des éléments du bras manipulateur, on peut corriger à tout instant l'écart de positionnement de l'extrémité du bras par rapport à une position théorique, au cours du mouvement du bras et donc faire suivre à la charge transportée une trajectoire coïncidant en tout point avec une trajectoire théorique.

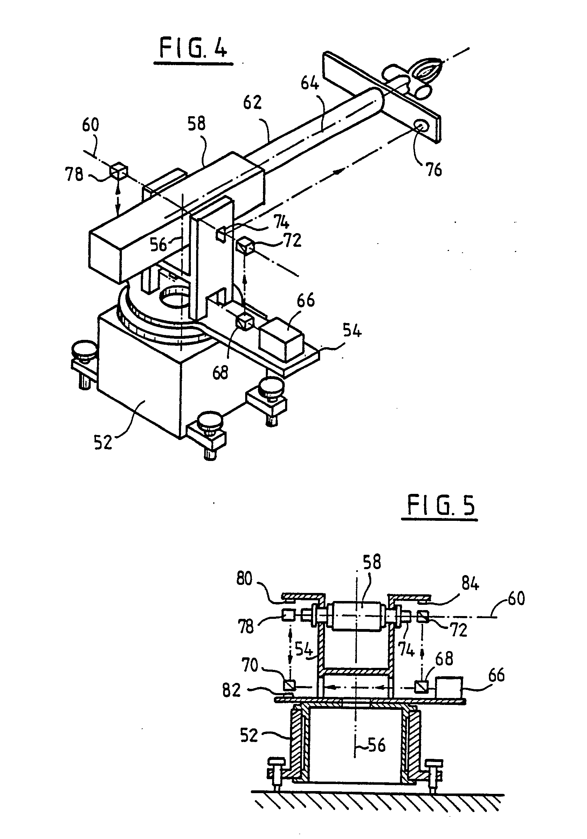

On se réfère maintenant aux figures 4 et 5 représentant une autre forme de réalisation de l'invention.

Le bras manipulateur représenté dans ces figures comprend un bati ou socle 52 sur lequel un premier élément 54 du bras est monté mobile en rotation autour d'un axe vertical 56. Le deuxième élément 58 du bras est monté mobile en rotation autour d'un axe horizontal 60 à l'extrémité supérieure du premier élément 54, et un troisième élément 62 est porté par le deuxième élément 58 et est déplaçable en translation le long de l'axe longitudinal 64 de celui-ci, perpendiculaire à l'axe 60.

Le dispositif selon l'invention comprend une source 66 de lumière cohérente, portée par la base du premier élément 54 et émettant un faisceau lumineux horizontal à section circulaire avec une répartition uniforme d'énergie, qui rencontre l'axe vertical 56. Un premier miroir 68, fixé sur la base de l'élément 54, laisse passer horizontalement une fraction du faisceau en direction d'un deuxième miroir 70, porté également par la base de l'élément 54, et en réfléchit verticalement une autre fraction vers un troisième miroir 72 fixé à l'extrémité supérieure du premier élément 54 et placé sur l'axe de rotation 60 avec un quatrième miroir 74 fixé au deuxième élément 58. Les miroirs 72 et 74 sont inclinés à 45° sur l'axe de rotation 60. Le miroir 74 reçoit la fraction de faisceau lumineux qui est réfléchie par le miroir 72 le long de l'axe 60 et la réfléchit vers des moyens photorécepteurs 76 fixés au troisième élément.

La combinaison des miroirs 72 et 74 remplace le miroir 26 de la figure 1 et ses moyens d'asservissement avec un rapport de réduction l/2 à la rotation du deuxième élément, ce qui permet de simplifier notablement la structure du dispositif selon l'invention. Lorsque le premier élément 54 est déformé, le faisceau lumineux réfléchi entre les miroirs 72 et 74 ne passe plus exactement par l'axe de rotation 60 et décrit autour de cet axe un mouvement circulaire, son déplacement étant mesurable par les moyens photorécepteurs 76.

Par ailleurs, et notamment pour permettre la mesure de la torsion de l'élément 54 autour de son axe, le deuxième miroir 70 réfléchit le faisceau lumineux qu'il reçoit du miroir 68, vers un miroir 78 fixé à la partie supérieure du premier élément 54. Ce miroir 78 laisse passer une fraction du faisceau vers des moyens photorécepteurs 80 fixés à l'extrémité supérieure du premier élément 54, et en réfléchit une autre fraction vers des moyens photorécepteurs 82 fixés à la base de l'élément 54. Le miroir 72 laisse également passer une fraction du faisceau qu'il reçoit du miroir 68, vers des moyens photorécepteurs 84 fixés à l'extrémité supérieure de l'élément 54.

Ainsi, deux faisceaux lumineux parallèles sont émis par les miroirs 68 et 70 de part et d'autre de l'axe de l'élément 54 et viennent rencontrer les trois moyens photorécepteurs 80, 82 et 84 solidaires de cet élément, ce qui permet de recueillir six informations sur les déformations de l'élément (chaque moyen photorécepteur mesurant l'écart entre son centre et le point d'impact du faisceau et fournissant deux informations). On peut donc déterminer à partir de ces six informations, toutes les déformations correspondant aux 6 degrés de liberté de l'élément (trois déformations angulaires et trois déplacements par rapport à trois axes perpendiculaires).

Si l'on suppose qu'une déformation n'est pas à prendre en compte (l'allongement de l'élément le long de son axe longitudinal), on obtient six informations pour cinq déformations mesurables, ce qui laisse une information redondante pour vérification.

Le dispositif selon l'invention permet, comme on l'a déjà indiqué, d'augmenter par un facteur compris entre 10 et 100 la précision de déplacement et de positionnement d'un robot ou d'un bras manipulateur.

Ce dispositif est utile non seulement pendant le fonctionnement du robot ou du bras manipulateur, mais également lors de son étude et de sa conception, et permet d'alléger considérablement leur structure tout en garantissant la précision désirée par la mesure et la compensation permanente des déformations des éléments de cette structure.

Ce dispositif permet également de détecter et de mesurer les déformations des paliers par lesquels les éléments de la structure sont reliés en pivotement. Il suffit pour cela d'associer des miroirs et des moyens photodétecteurs aux paliers eux-mêmes.

Les moyens photodétecteurs peuvent être des cellules photoélectriques du type à quatre quadrants qui sont capables de mesurer un déplacement du point d'impact du faisceau lumineux de l'ordre de 1 micron. Cela correspond, pour une distance d'un mètre entre la cellule photoélectrique et le point de départ du faisceau lumineux, à un écart angulaire de $10^{-6}$ radian. La précision de la détection et de la mesure des éléments de la structure est donc extrêmement élevée.

L'invention est également susceptible d'application à des structures complexes formées d'éléments rigides reliés fixement entre eux et dont il faut surveiller les déformations.

## Revendications

1. Dispositif pour contrôler la géométrie d'une structure mécanique à plusieurs éléments rigides reliés entre eux, comprenant des moyens pour détecter et mesurer en permanence les positions relatives desdits éléments (10, 12, 14), ces moyens comprenant pour chaque élément des premier et second faisceaux lumineux (24, A, A', B, B', C, C') parcourant l'élément correspondant (10, 12, 14) dans des directions opposées et des moyens photo-détecteurs (28, 32, 36, 40, 42, 46) associés à chaque élément et positionnés de façon à recevoir au moins des fractions des faisceaux lumineux (A, A', B, B', C, C'), caractérisé en ce qu'il comprend également des moyens (26, 34) associés à chaque élément (10, 12) pour diriger une fraction de l'un (A, B) des faisceaux lumineux de cet élément vers un élément adjacent, (12, 14) de la structure pour constituer un premier faisceau lumineux (B, C) de l'élément adjacent.

2. Dispositif selon la revendication 1, caractérisé en ce qu'il comprend, pour chaque élément (10, 12, 14), des moyens (30, 38, 44) réfléchissant une fraction du premier faisceau lumineux (A, B, C) de cet élément pour former le second faisceau lumineux (A', B', C').

3. Dispositif selon l'une des revendications précédentes, caractérisé en ce qu'il comprend une source lumineuse (22) unique engendrant un faisceau lumineux (24) et disposée en un point fixe d'une extrémité (16) de la structure, et des moyens (26, 34) de jonction optique entre les éléments (10, 12, 14) assurant la continuité du faisceau lumineux (24) d'un élément à l'autre de la structure pour former les premier et second faisceaux lumineux de chaque élément.

4. Dispositif selon la revendication 3, caractérisé en ce que la source de lumière (22) émet un faisceau de lumière cohérente.

5. Dispositif selon la revendication 3 ou 4, caractérisé en ce que les moyens de jonction optique comprennent des miroirs (26, 34) et/ou des fibres optiques.

6. Dispositif selon l'une des revendications précédentes, caractérisé en ce qu'au moins un élément (10, 12, 14) de la structure comprend un miroir (30, 38, 44) qui lui est associé fixement et qui intercepte au moins une fraction du premier faisceau lumineux (A, B, C) et qui redirige cette fraction vers des moyens photo détecteurs (32, 40, 46) associés fixement à une extrémité de cet élément, une autre fraction du premier faisceau lumineux (A, B, C), passant à travers le miroir vers d'autres moyens photo détecteurs (28, 36, 42) situés à l'extrémité opposée de l'élément par rapport aux premiers photo-détecteurs cités.

7. Dispositif selon l'une des revendications précédentes, caractérisé en ce que les moyens photodétecteurs (28, 32, 36, 40, 42, 46) sont des éléments photo-électriques bidimensionnels, par exemple des cellules à quatre quadrants, mesurant l'écart du point d'impact du faisceau lumineux par rapport à leur centre.

8. Dispositif selon l'une des revendications précédentes, caractérisé en ce que les moyens photodétecteurs sont reliés à des moyens (50) de traitement de l'information permettant de déterminer la déformation d'ensemble de la structure ou le déplacement d'au moins un point particulier de celle-ci.

9. Dispositif selon la revendication 8, caractérisé en ce que la structure comprend des éléments (10, 12, 14) capables de déplacements commandés les uns par rapport aux autres et dont le dernier doit être positionné avec précision par rapport au premier ou par rapport à un support fixe, et en ce que les moyens précités (50) de traitement de l'information prennent en compte les déformations mesurées desdits éléments pour commander le déplacement d'au moins l'un des éléments mobiles (12, 14) afin de compenser tout écart de position et d'orientation du dernier élément (14).

10. Dispositif selon la revendication 9, caractérisé en ce que les éléments mobiles (12, 14) de la structure sont munis de capteurs de déplacement (D1, D2) et de moteurs de déplacement (M1, M2) qui sont reliés aux moyens précités (50) de traitement de l'information.

11. Dispositif selon la revendication 9 ou 10, caractérisé en ce qu'au moins un moyen de jonction optique entre deux éléments (10, 12, 14) dont l'un pivote par rapport à l'autre, est constitué par un miroir (26, 34) incliné sur l'axe de pivotement (18, 20) correspondant et asservi au pivotement relatif des deux éléments (10, 12; 12, 14).

12. Dispositif selon la revendication 9 ou 10, caractérisé en ce qu'au moins un moyen de jonction optique entre deux éléments (54, 58) dont l'un pivote par rapport à l'autre autour d'un axe 60, comprend deux miroirs (72, 74) placés sur cet axe et orientés à 45° par rapport à cet axe, l'un (72) des miroirs étant fixé à l'un (54) des éléments et l'autre miroir (74) étant fixé à l'autre élément (58), le miroir (72) recevant le faisceau lumineux parcourant l'élément (54) et le réfléchissant le long de l'axe 60 vers l'autre miroir (72) qui le réfléchit lui-même parallèlement à l'axe (64) de l'autre élément.

13. Dispositif selon l'une des revendications précédentes, caractérisé en ce que, pour la mesure de la torsion d'un élément (54) autour de son axe (56), il comprend des moyens (68, 70) émettant deux faisceaux lumineux parallèles de part et d'autre de l'axe (56) de l'élément (54), et trois moyens photo récepteurs (80, 82, 84) fixés aux extrémités de l'élément (54) sur le trajet de ces faisceaux.

## Patentansprüche

1. Einrichtung zum Oberwachen der Geometrie einer mechanischen Struktur mit mehreren starren, miteinander verbundenen Elementen, die Mittel zum ständigen Erfassen und Messen der Winkellage der Elemente (10, 12, 14) aufweist, wobei diese Mittel für jedes Element erste und zweite Strahlenbündel (24, A, A', B, B', C, C'), die in entgegengesetzten Richtungen das entsprechende Element (10, 12, 14) durchlaufen und Photodetektor-Mittel (28, 32, 36, 40, 42, 46) aufweisen, die mit jedem Element verbunden und so angeordnet sind, daß zumindest Teile der Strahlenbündel (A, A', B, B', C, C') empfangen werden, dadurch gekennzeichnet, daß sie auch mit jedem Element (10, 12) verbundene Mittel (26, 34) aufweist, um einen Teil des einen (A, B) der Strahlenbündel dieses Elementes gegen ein angrenzendes Element (12, 14) der Struktur zu lenken, um ein erstes Strahlenbündel (B, C) des angrenzenden Elementes zu bilden.

2. Einrichtung nach Anspruch 1, dadurch gekennzeichnet, daß sie für jedes Element (10, 12, 14) Mittel (30, 38, 44) aufweist, die einen Teil des ersten Strahlenbündels (A, B, C) dieses Elementes reflektieren, um das zweite Strahlenbündel (A', B', C') zu bilden.

3. Einrichtung nach einem der vorhergehenden Ansprüche, dadurch gekennzeichnet, daß sie eine einzelne Lichtquelle (22), die ein Strahlenbündel (24) erzeugt und einem festen Punkt eines äußersten Endes (16) der Struktur angeordnet ist und optische Verbindungsmittel (26, 34) zwischen den elementen (10, 12, 14) aufweist, welche die Kontinuität des Strahlenbündels (24) von einem Element zu einem anderen der Struktur gewährleisten, um die ersten und zweiten Strahlenbündel jedes Elementes zu bilden.

4. Einrichtung nach Anspruch 3, dadurch gekennzeichnet, daß die Lichtquelle (22) einen kohärenten Lichtstrahl emittiert.

5. Einrichtung nach Anspruch 3 oder 4, dadurch gekennzeichnet, daß die optischen Verbindungsmittel Spiegel (26, 34) und/oder Lichtleitfasern aufweisen.

6. Einrichtung nach einem der vorhergehenden Ansprüche, dadurch gekennzeichnet, daß zurindes ein Element (10, 12, 14) de Struktur einen Spiegel (30, 38, 44) aufweist, der mit ihm fest verbunden ist und der zumindest einen Teil des ersten Strahlenbündels (A, B, C) auffängt und der diesen Teil gegen Photodetektor-Mittel (32, 40, 46) lenkt, die mit einem äußersten Ende dieses Elementes starr verbunden sind, wobei ein anderer Teil des ersten Strahlenbündels (A, B, C) durch den Spiegel gegen andere Photodetektor-Mittel (28, 36, 42) hindurchtritt, die an dem bezüglich der ersten Photodetektoren entgegengesetzten äußersten Ende des Elementes gelegen sind.

7. Einrichtung nach einem der vorhergehenden Ansprüche, dadurch gekennzeichnet, daß die Photodetektor-Mittel (28, 32, 36, 40, 42, 46) zweidimensionale photoelektrische Elemente, beispielsweise Vierquadrantenzellen sind, welche die Abweichung des Auftreffpunktes des Strahlenbündels bezüglich ihres Zentrums messen.

8. Einrichtung nach einem der vorhergehenden Ansprüche, dadurch gekennzeichnet, daß die Photodetektor-Mittel mit Informationsverarbeitungsmitteln (50) verbunden sind, welche das Bestimmen der Verformung der Gesamtheit der Struktur oder der Verschiebung zumindest eines besonderen Punktes von ihr ermöglichen.

9. Einrichtung nach Anspruch 8, dadurch gekennzeichnet, daß die Struktur Elemente (10, 12, 14) aufweist, die aufeinanderbezogen gesteuerte Bewegungen ausführen können und deren letztes mit Präzision bezüglich des ersten oder bezüglich eines festen Trägers angeordnet sein soll und daß die Informationsverarbeitungsmittel (50) die gemessenen Verformungen der Elemente berücksichtigen, um die Verschiebung zumindest eines der beweglichen Elemente (12, 14) zu steuern, damit jede Lagen- und Richtungsabweichung des letzten Elementes (14) ausgeglichen wird.

10. Einrichtung nach Anspruch 9, dadurch gekennzeichnet, daß die beweglichen Elemente (12, 14) der Struktur mit Verschiebungssensoren (D1, D2) und Terschiebungsmotoren (M1, M2) versehen sind, die mit den Informationsverarbeitungsmitteln (50) verbunden sind.

11. Einrichtung nach Anspruch 9 oder 10, dadurch gekennzeichnet, daß zumindest ein optisches Verbindungsmittel zwichen zwei Elementen (10, 12, 14) bei denen sich das eine bezüglich des anderen dreht, von einem Spiegel (26, 34) gebildet ist, der um die entsprechende Drehachse (18, 20) schräg liegt und bezüglich zwei Elemente (10, 12; 12, 14) einer Drehung unterworfen ist.

12. Einrichtung nach Anspruch 9 oder 10, dadurch gekennzeichnet, daß zumindest ein optisches Verbindungsmittel zwischen zwei Elementen (54, 58), bei denen sich das eine bezüglich des anderen um eine Achse (60) dreht, zwei Spiegel (72, 74) aufweist, die an dieser Achse angebracht und bezüglich dieser Achse unter 45° nusgerichtet sind, wobei der eine (72) der Spiegel an einem (54) der Elemente befestigt und der andere Spiegel (74) an dem anderen Element (58) befestigt ist, der Spiegel (72) das Strahlenbündel empfängt, das durch das Element (54) hindurchtritt und es entlang der Achse (60) gegen den anderen Spiegel (72) reflektiert, der es selbst parallel zu der Achse (64) des anderen Elementes reflektiert.

13. Einrichtung nach einem der vorhergehenden Ansprüche, dadurch gekennzeichnet, daß sie zum Messen der Verdrehung eines Elementes (54) um seine Achse (56) Mittel (68, 70), die zwei Strahlenbündel beiderseites parallel zu der Achse (56) des Elementes (54) emittiert und drei Photorezeptor-Mittel (80, 82, 84) aufweist, die an den äußersten Enden des Elementes (54) auf dem Weg dieser Bündel befestigt sind.

**Claims**

1. A system for monitoring the geometry of a mechanical structure comprising a plurality of interconnected rigid elements, said system including means for detecting and measuring on a permanent basis the relative positions of said elements (10, 12, 14), including for each element first and second light beams (24, A, A', B, B', C, C') running along the corresponding element (10, 12, 14) in opposite directions at least between its junctions with the adjacent element, and photodetector means (28, 32, 36, 40, 42, 46) associated with each element and positioned to receive at least fractions of said light beams (A, A', B, B', C, C'), characterized in that it comprises also means (26, 34) associated with each element (10, 12) for directing a fraction of one (A, B) of the light beams of this element towards an adjacent element (12, 14) of the structure to constitute a first light beam (B, C) of said adjacent element.

2. A system according to claim 1, characterized in that it comprises for each element (10, 12, 14), means (30, 38, 44) for reflecting a fraction of the first light beam (A, B, C) of this element to form the second light beam (A', B', C').

3. A system according to any preceding claim, characterized in that it includes a single light source (22) generating a light beam (24) and disposed at a fixed point at one end (16) of the structure, and optical junction means (26, 34) between the elements (10, 12, 14) ensuring continuity of the light beam (24) from one element to the next of the structure, to form the first and second light beams of each element.

4. A system according to claim 3, characterized in that the light source (22) emits a beam of coherent light.

5. A system according to claim 3 or 4, characterized in that the optical junction means comprise mirrors (26, 34) and/or optical fibers.

6. A system according to any preceding claim, characterized in that at least one element (10, 12, 14) of the structure includes a mirror (30, 38, 44) which is fixedly associated therewith and which intercepts a fraction of the first light beam (A, B, C) and returns said fraction towards photodetector means (32, 40, 46) which are fixedly associated with one end of said element, another fraction of the first light beam (A, B, C) passing through the mirror towards another photodetector means (28, 36, 42) located at the opposite end of said element from said first cited photodetectors.

7. A system according to any preceding claim, characterized in that the photodetector means (28, 32, 36, 40, 42, 46) are two dimensional photoelectric elements, for example four-quadrant cells, for measuring the error in the point of impact of the beam relative to their center.

8. A system according to any preceding claim, characterized in that the photo-detector means are connected to data processing means (50) for determining the deformation of the structure as a whole or the displacement of at least one special point thereof.

9. A system according to claim 8, characterized in that said structure includes elements (10, 12, 14) capable of controlled displacements relative to one another and in which the last element is to be accurately positioned relative to the first element or relative to a fixed support, and in that said data processing means (50) take account of the measured deformations of said elements in order to control the displacement of at least one of said moving elements (12, 14) in order to compensate for any position or orientation error of the last element (14).

10. A system according to claim 9, characterized in that the moving elements (12, 14) of the structure are provided with displacement sensors (D1, D2) and displacements motors (M1, M2) which are connected to said data processing means (50).

11. A system according to claim 9 or 10, characterized in that at least one optical junction means between two of the elements (10, 12, 14) which pivot relative to each other is constituted by an inclined mirror (26, 34) on the corresponding pivot axis (18, 20) and servo-controlled to the relative pivoting between the two elements (10, 12; 12, 14).

12. A system according to claim 9 or 10, characterized in that at least one optical junction means between two elements (54, 56) which pivot relative to each other about an axis (60), comprises two mirrors (72, 74) placed on said axis and oriented at 45° relative to said axis, one of said mirrors (72) being fixed to one of said element (54) and the other mirror ((74) being fixed to the other element (58), the mirror (72) receiving the light beam running along the element (54) and reflecting it along the axis (60) towards the other mirror (74) which then reflects it parallel to the axis (64) of the other element.

13. A system according to any preceding claim, characterized in that in order to measure twisting of an element (54) about its axis (56), the system includes means (68, 70) emitting two parallel light beams on either side of the axis (56) of the element (54), and three photo-sensitive means (80, 82, 84) fixed to the ends of the element (54) on the paths of said beams.

FIG.1

FIG. 2

FIG.3

FIG. 4

FIG. 5

2